# EUROPÄISCHE PATENTSCHRIFT

(11) **EP 4 373 639 B1**
(45) Veröffentlichungstag und Bekanntmachung des Hinweises auf die Patenterteilung: **18.03.2026**
(21) Anmeldenummer: 22740413.4
(22) Anmeldetag: 07.07.2022
(51) Int. Cl.: B25F 5/00

(54) **KOMMUNIKATION ZWISCHEN EINER WERKZEUGMASCHINE UND EINEM AKKUMULATOR**
COMMUNICATION BETWEEN A MACHINE TOOL AND A BATTERY
COMMUNICATION ENTRE UNE MACHINE-OUTIL ET UN ACCUMULATEUR

(30) Priorität: 20.07.2021 EP 21186591
(43) Veröffentlichungstag der Anmeldung: 29.05.2024
(73) Patentinhaber: Hilti Aktiengesellschaft, 9494 Schaan (LI)
(72) Erfinder: MAYER, Stefan, 86857 Hurlach (DE); HAUSER, Klaus, 86830 Schwabmünchen (DE); KOSCHECK, David, 86899 Landsberg (DE)
(74) Vertreter: Hilti Aktiengesellschaft Corporate Intellectual Property
(86) Internationale Anmeldenummer: PCT/EP2022/068819
(87) Internationale Veröffentlichungsnummer: WO 2023/001562

(56) Entgegenhaltungen:
- EP-A1- 3 795 302
- US-A1- 2019 006 980
- US-A1- 2020 235 357

## Beschreibung

Die vorliegende Erfindung betrifft ein Verfahren für eine Kommunikation zwischen einer Werkzeugmaschine sowie einem Akkumulator zur Versorgung der Werkzeugmaschine mit elektrischer Energie, wobei der Akkumulator eine Steuerungseinrichtung mit wenigstens einem ersten Transceiver und die Werkzeugmaschine eine Steuereinrichtung mit wenigstens einem zweiten Transceiver enthält. Ein Verfahren gemäß dem Oberbegriff des Anspruchs 1 ist bereits aus der US 2019/006980 A1 bekannt.

Des Weiteren betrifft die vorliegende Erfindung ein System zur Durchführung des Verfahrens für eine Kommunikation enthaltend eine Werkzeugmaschine sowie einen Akkumulator.

Darüber hinaus betrifft die vorliegende Erfindung einen Akkumulator zur Durchführung des Verfahrens für eine Kommunikation.

Ferner betrifft die vorliegende Erfindung eine Werkzeugmaschine zur Durchführung des Verfahrens für eine Kommunikation.

Für die Versorgung einer elektrisch betriebenen Werkzeugmaschine mit elektrischer Energie wird oftmals ein Akkumulator wiederlösbar mit der Werkzeugmaschine verbunden, sodass die im Inneren des Akkumulators angeordneten Energiespeicherzellen (auch Akku-Zellen genannt) eine gespeicherte elektrische Energie an entsprechende Verbraucher der Werkzeugmaschine abgeben können. Bei den Verbrauchern kann es sich um den Antrieb der Werkzeugmaschine, eine Lampe, eine Steuerungsvorrichtung oder dergleichen handeln. Eine Vorrichtung für eine derartige Verbindung zwischen der Werkzeugmaschine und dem Akkumulator besteht dabei zum einen aus mechanischen Anbindungskomponenten sowie aus elektrischen Anschlüssen. Eine derartige Verbindungsvorrichtung wird dabei auch oftmals als Schnittstelle oder Schnittstellenvorrichtung bezeichnet.

Die elektrischen Anschlüssen sind dabei für gewöhnlich als wiederlösbare Steckverbindungen in dem jeweiligen Plus- bzw. Minuspfaden der elektrischen Energieversorgung vorgesehen, sodass hierdurch der Plus- und Minuskontakt des Akkumulators mit den entsprechenden Plus- und Minuskontakten der Verbraucher der Werkzeugmaschine in Verbindung stehen.

Die mechanischen Komponenten können beispielsweise in Form eines Schienensystems oder einer Steckverbindung ausgestaltet sein, mit deren Hilfe der Akkumulator auf die als Schnittstelle ausgestaltete Verbindungsvorrichtung an der Werkzeugmaschine geschoben und auch wieder entnommen werden kann. Durch das Aufschieben des Akkumulators an die Werkzeugmaschine verbinden sich die Anschlüsse (d.h. Plus- und Minuskontakte) des Akkumulators mit den korrespondierenden Anschlüssen der Werkzeugmaschine, sodass die in dem Akkumulator gespeicherte elektrische Energie zu den Verbrauchern der Werkzeugmaschine gelangen kann.

Eine exakte und vor allem feste Verbindung zwischen der Werkzeugmaschine und dem Akkumulator stellt oftmals eine gewisse Herausforderung dar.

Zum einen müssen die mechanischen Komponenten sowie elektrischen Anschlüsse in ihrer Ausgestaltung eine relativ einfache Handhabung gewährleisten, sodass ein möglichst unkompliziertes Anbringen sowie erneutes Entfernen des Akkumulators an bzw. von der Werkzeugmaschine gegeben ist.

Zum anderen müssen die mechanischen Komponenten sowie elektrischen Anschlüsse relativ robust sein, damit diese den Bewegungen, Vibrationen und Stößen während der Verwendung der Werkzeugmaschine mit dem angeschlossenen Akkumulator standhalten können.

Selbst eine kurzzeitige oder auch vorübergehende Unterbrechung der Verbindung zwischen der Werkzeugmaschine mit dem Akkumulator ist in jedem Falle unerwünscht.

Eine Unterbrechung der Verbindung kann dabei zu einer diskontinuierlichen Versorgung der Werkzeugmaschine mit elektrischer Energie aus dem Akkumulator führen, sodass der Elektromotor der Werkzeugmaschine nicht mehr gleichmäßig und/oder nur noch mit verringerter Drehzahl dreht. Dies kann beispielsweise wiederum zu Leistungsschwankungen am Elektromotor führen, sodass kein gleichmäßiges oder lediglich ein zu geringes Drehmoment von dem Elektromotor erzeugt wird. Leistungs- bzw. Drehzahlschwankungen, die eine verringerte Drehmomentausgabe des Elektromotors erzeugen, führen schließlich zu einem ineffizienten Arbeiten der Werkzeugmaschine.

Des Weiteren kann eine derartige Unterbrechung der Energieversorgung auch auf eine Fehlfunktion des Akkumulators hindeuten. Fehlfunktion des Akkumulators sind stets zu beachten, da diese letztendlich zu einem Komplettversagen bzw. Totalausfall des Akkumulators führen können.

Darüber hinaus kann eine Unterbrechung der Verbindung auch auf ein bevorstehendes Versagen der mechanischen Komponenten der Verbindungsvorrichtung hindeuten. Bei einem Versagen der mechanischen Komponenten kann der Akkumulator sich von der Werkzeugmaschine trennen und zu Boden stürzen, wodurch der Akkumulator dauerhaft beschädigt werden kann.

Problematisch ist in diesem Zusammenhang, dass ein anfängliches bzw. beginnendes Ablösen oder Trennen des Akkumulators von der Werkzeugmaschine oftmals unbemerkt bleibt bis schließlich ein plötzlicher Absturz des Akkumulators und damit ein Versagen oder eine dauerhafte Beschädigung des Akkumulators eingetreten ist.

Aufgabe ist es daher frühestmöglich zu detektieren, dass eine Störung in der Verbindung zwischen der Werkzeugmaschine und dem Akkumulator vorliegt, die schließlich ein Abtrennen des Akkumulators von der Werkzeugmaschine verursachen kann, sowie entsprechende Maßnahmen ergriffen werden.

Es ist daher Aufgabe der vorliegenden Erfindung ein Verfahren für eine bidirektionale Kommunikation zwischen einer Werkzeugmaschine sowie einem Akkumulator bereitzustellen, mit dem das vorstehend genannte Problem gelöst und insbesondere auf eine fehlerhafte Anbindung des Akkumulators an der Werkzeugmaschine hingewiesen werden kann.

Die Aufgabe wird gelöst durch den Gegenstand des Anspruchs 1 sowie durch den Gegenstand des Anspruchs 2, 3 und 4.

Die Aufgabe wird dabei gelöst durch ein Verfahren für eine Kommunikation zwischen einer Werkzeugmaschine sowie einem Akkumulator zur Versorgung der Werkzeugmaschine mit elektrischer Energie, wobei der Akkumulator eine Steuerungseinrichtung mit wenigstens einem ersten Transceiver und die Werkzeugmaschine eine Steuereinrichtung mit wenigstens einem zweiten Transceiver enthält.

Erfindungsgemäß enthält das Verfahren die Verfahrensschritte
- Aussenden wenigstens eines ersten Signals von dem ersten Transceiver an den zweiten Transceiver,
- Aussenden wenigstens eines zweiten Signals von dem ersten Transceiver an den zweiten Transceiver nach Ablauf einer vorbestimmten Zeitdauer,
- Einstellen der Werkzeugmaschine von einem ersten Betriebszustand in einen zweiten Betriebszustand, wenn die Anzahl der von dem zweiten Transceiver empfangenen Signale in einer vorbestimmten Zeitdauer einen vorbestimmten Schwellwert erreicht und/oder die Art des von dem zweiten Transceiver empfangenen Signals von einer vorbestimmten Art gemäß eines vorbestimmten Schwellwertes abweicht,
- Aussenden wenigstens eines Signals von dem zweiten Transceiver an den ersten Transceiver zum Einstellen des Akkumulators von einem ersten Betriebszustand in einen zweiten Betriebszustand, wenn die Anzahl der von dem zweiten Transceiver empfangenen Signale in einer vorbestimmten Zeitdauer einen vorbestimmten Schwellwert erreicht und/oder die Art des von dem zweiten Transceiver empfangenen Signals von einer vorbestimmten Art gemäß eines vorbestimmten Schwellwertes abweicht,
- Aussenden eines Signals mit einem Synchronisationsmuster von dem ersten Transceiver an den zweiten Transceiver zum Anpassen der Übertragungsrate für die Kommunikation zwischen dem wenigstens ersten Transceiver und zweiten Transceiver.

Bei dem ersten Betriebszustand kann es sich um einen Aktivierungsmodus der Werkzeugmaschine bzw. des Akkumulators handeln, wobei wenigstens eine Funktion der Werkzeugmaschine bzw. des Akkumulators aktiviert ist. Bei der wenigstens einen Funktion der Werkzeugmaschine kann es sich um den Betrieb eines Antriebs der Werkzeugmaschine handeln zum Erzeugen eines Drehmoments. Des Weiteren kann es sich bei der wenigstens einen Funktion des Akkumulators um das Bereitstellen der in dem Akkumulator gespeicherten elektrischen Energie handeln. Bei dem zweiten Betriebszustand kann es sich um einen Deaktivierungsmodus handeln, wobei alle Funktionen der Werkzeugmaschine bzw. des Akkumulators deaktiviert sind. Durch die Deaktivierung aller Funktionen der Werkzeugmaschine ist z.B. auch der Betrieb des Antriebs der Werkzeugmaschine zum Erzeugen eines Drehmoments wenigstens zeitweise unterbrochen. Die Deaktivierung aller Funktionen des Akkumulators führt zu einer wenigstens zeitweisen Unterbrechens des Bereitstellens der in dem Akkumulator gespeicherten elektrischen Energie.

Bei der Art des Signals kann es sich um eine oder mehrere Eigenschaften des Kommunikationssignals handeln. Bei den Eigenschaften des Kommunikationssignals kann es sich um einen Spannungspegel (auch als Voltage level bekannt), einen Stromstärkenpegel (auch als Current level bekannt), die Spanungsflanke bzw. Signalflanken (auch als Voltage edge bekannt), einen Spannungsabfall (auch als Voltage drop bekannt), einen Spannungsanstieg (auch als Voltage raise bekannt), eine Anzahl an Bits oder dergleichen

Bei der Kommunikation zwischen der Werkzeugmaschine und dem Akkumulator kann es sich um eine bidirektionalen oder um eine monodirektionale bzw. unidirektionale Kommunikation handeln. Bei der bidirektionalen Kommunikation können Signale, Daten und Informationen zwischen der Werkzeugmaschine und dem Akkumulator ausgetauscht werden. Im Gegensatz dazu werden bei einer monodirektionalen bzw. unidirektionalen Kommunikation Signale, Daten und Informationen lediglich von dem Akkumulator zu der Werkzeugmaschine oder von der Werkzeugmaschine zu dem Akkumulator gesendet.

Die Übertragungsrate für die Kommunikation zwischen dem wenigstens ersten und zweiten Transceiver kann dabei auch als "baud rate" bezeichnet werden.

Des Weiteren wird die Aufgabe gelöst durch ein System zur Durchführung des Verfahrens für eine Kommunikation enthaltend eine Werkzeugmaschine sowie einen Akkumulator zur Versorgung der Werkzeugmaschine mit elektrischer Energie, wobei der Akkumulator wenigstens einen ersten Transceiver und die Werkzeugmaschine wenigstens einen zweiten Transceiver enthält, und wobei der Akkumulator ein erstes Kommunikationselement und die Werkzeugmaschine ein zweites mit dem ersten Kommunikationselement verbindbares Kommunikationselement enthält, wobei in einem verbundenen Zustand Signale zwischen dem ersten und zweiten Kommunikationselement übermittelbar sind.

Akkumulator zur Durchführung des Verfahrens für eine Kommunikation enthaltend eine Steuerungseinrichtung mit wenigstens einem ersten Transceiver enthält.

Werkzeugmaschine zur Durchführung des Verfahrens für eine Kommunikation enthaltend eine Steuereinrichtung mit wenigstens einem zweiten Transceiver enthält.

Weitere Vorteile ergeben sich aus der folgenden Figurenbeschreibung. In den Figuren sind verschiedene Ausführungsbeispiele der vorliegenden Erfindung dargestellt. Die Figuren, die Beschreibung und die Ansprüche enthalten zahlreiche Merkmale in Kombination. Der Fachmann wird die Merkmale zweckmäßigerweise auch einzeln betrachten und zu sinnvollen weiteren Kombinationen zusammenfassen.

In den Figuren sind gleiche und gleichartige Komponenten mit gleichen Bezugszeichen beziffert. Es zeigen:
- Figur 1: eine schematische Seitenansicht auf ein erfindungsgemäßes System mit einer Werkzeugmaschine und einem mit der Werkzeugmaschine verbundenen Akkumulator;
- Figur 2a: eine perspektivische Ansicht auf den Akkumulator mit einer Akku-Schnittstelle;
- Figur 2b: eine perspektivische Ansicht auf die Werkzeugmaschine mit einer Werkzeugmaschine-Schnittstelle; und
- Figur 3: eine perspektivische Ansicht auf einen Handgriff zusammen mit einer Fussvorrichtung der Werkzeugmaschine und den Akkumulator mit der Akku-Schnittstelle.

### Ausführungsbeispiele:

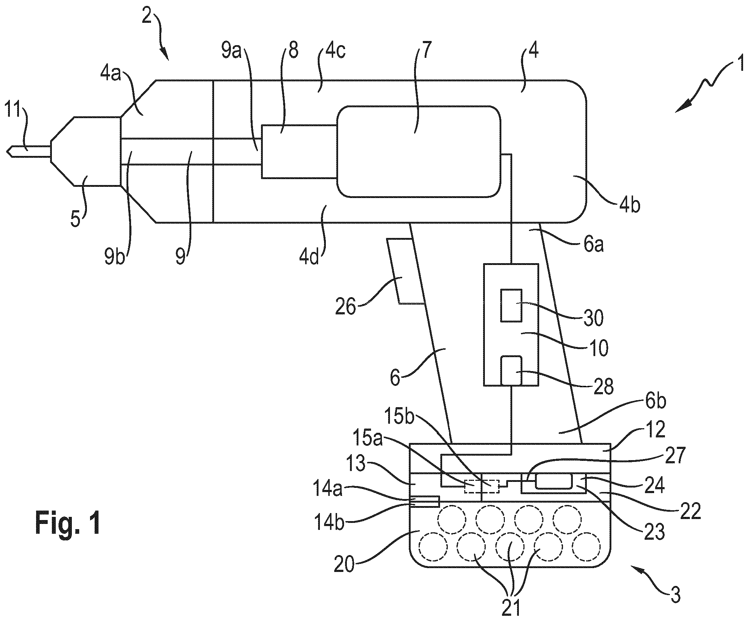

Ein bevorzugtes Ausführungsbeispiel eines erfindungsgemäßen Systems 1 mit einer Werkzeugmaschine 2 und einem Akkumulator 3 ist in Figur 1 dargestellt.

Die Werkzeugmaschine 2 in dem vorliegenden Ausführungsbeispiel ist in Form eines Akku-Schraubers ausgestaltet. Gemäß einer alternativen Ausgestaltungsform kann die Werkzeugmaschine 2 auch in Form eines Bohrhammers, einer Säge, eines Schleifgeräts oder dergleichen ausgestaltet sein.

Die Werkzeugmaschine 2 enthält dabei im Wesentlichen ein Gehäuse 4, eine Werkzeugaufnahme 5 sowie einen Handgriff 6.

Das Gehäuse 4 der Werkzeugmaschine 2 enthält wiederum ein vorderes Ende 4a, ein hinteres Ende 4b, ein Oberseite 4c sowie eine Unterseite 4d. Wie in Figur 1 angedeutet, ist in dem Inneren des Gehäuses 4 ein Antrieb 7, ein Getriebevorrichtung 8, ein Abtriebswelle 9 und eine Steuereinrichtung 10 positioniert. Der Antrieb 7 ist dabei als bürstenloser Elektromotor ausgestaltet. Alternativ kann der Antrieb 7 auch als Elektromotor mit einer Kommutierung mit Kohlebürsten ausgestaltet sein.

Der als bürstenloser Elektromotor ausgestaltete Antrieb 7 dient zum Erzeugen eines Drehmoments. Der Antrieb 7 ist so mit der Getriebevorrichtung 8 verbunden, dass das vom Antrieb 7 erzeugte Drehmoment auf die Getriebevorrichtung 8 übertragen wird. Die Abtriebswelle 9 enthält ein erstes Ende 9a und ein zweites Ende 9b. Die Getriebevorrichtung 8 ist wiederum mit dem ersten Ende 9a der Abtriebswelle 9 verbunden, sodass das von dem Antrieb 7 erzeugte Drehmoment auf die Abtriebswelle 9 übertragen wird. Das zweite Ende 9b der Abtriebswelle 9 ist mit der Werkzeugaufnahme 5 so verbunden, dass das Drehmoment der Abtriebswelle 9 auf die Werkzeugaufnahme 5 übertragen wird. Die Werkzeugaufnahme 5 dient zum Aufnehmen und Halten eines Werkzeugs 11. In dem vorliegenden Ausführungsbeispiel ist das Werkzeug 11 als Schrauber-Bit ausgestaltet. Mit Hilfe des auf die Werkzeugaufnahme 5 übertragenen Drehmoments wird schließlich das Drehmoment auf das als Schrauber-Bit ausgestaltete Werkzeug 11 übertragen.

Der Handgriff 6 enthält ein erstes Ende 6a sowie ein zweites Ende 6b und dient zum Halten und Führen der Werkzeugmaschine 2 durch einen Anwender. Der Anwender ist in den Figuren nicht dargestellt. An einer Seite des Handgriffs 6 ist ein Schalter zum Aktivieren der Werkzeugmaschine positioniert. Das erste Ende 6a des Handgriffs 6 ist an der Unterseite 4d des Gehäuses 4 angeordnet. An dem zweiten Ende 6b des Handgriffs 6 ist mit einer Fussvorrichtung 12 verbunden. An der Fussvorrichtung 12 ist eine Werkzeugmaschine-Schnittstelle 13 enthalten. Die Werkzeugmaschine-Schnittstelle 13 dient als Anschluss für den Akkumulator 3.

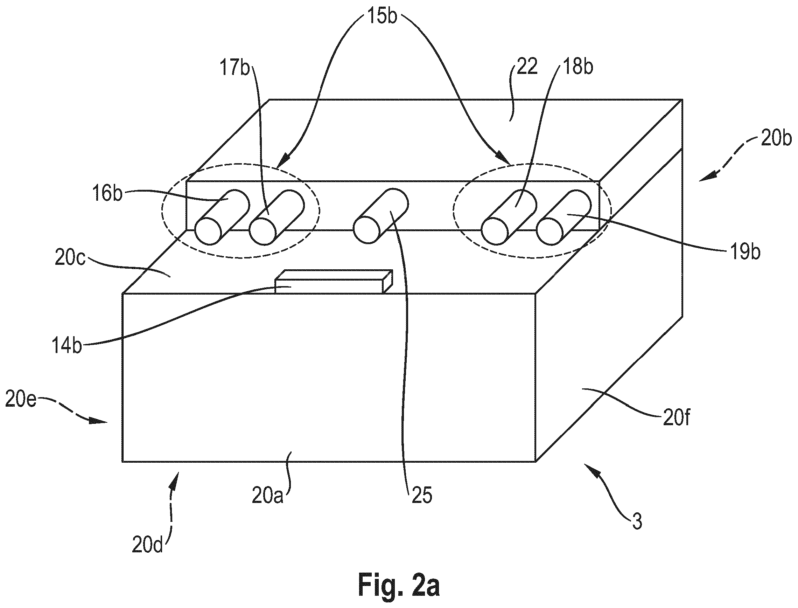

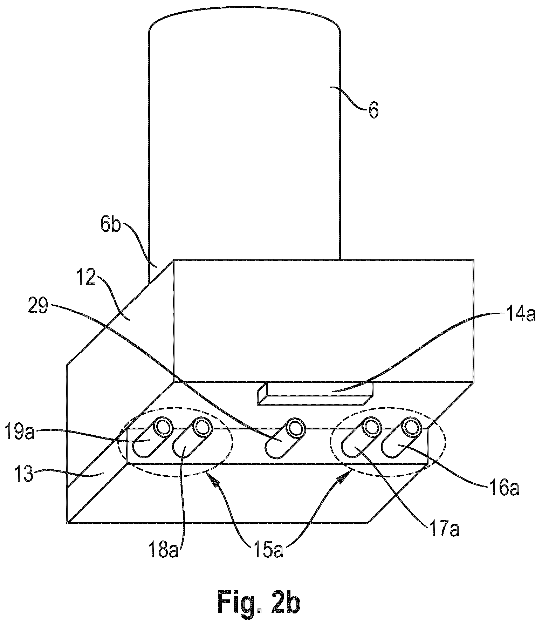

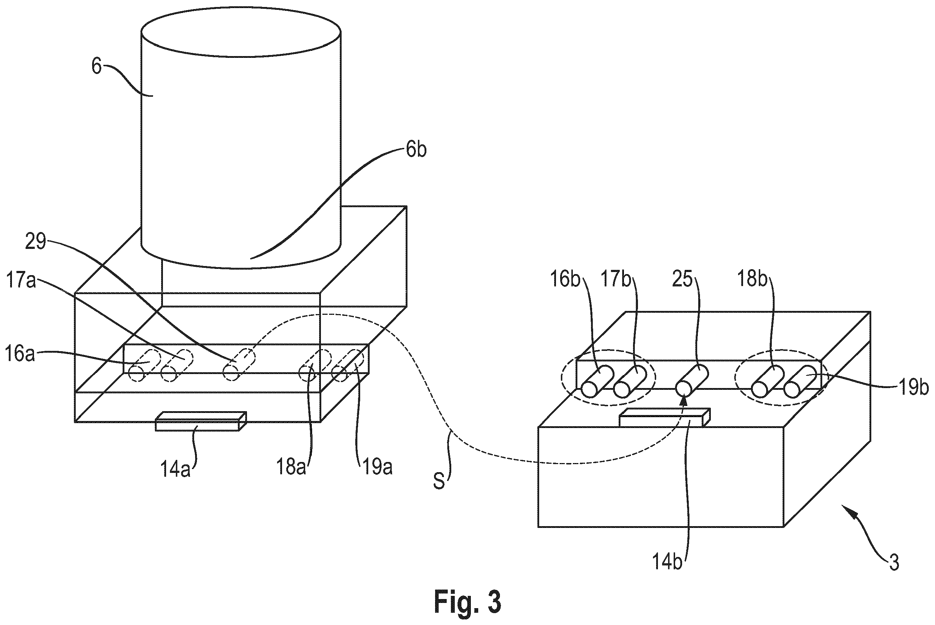

Wie in den Figuren 2 und 3 ersichtlich, enthält die Werkzeugmaschine-Schnittstelle 13 eine mechanische Anbindungskomponente 14a sowie elektrische Anschlüsse 15a. Die mechanische Anbindungskomponente 14a der Werkzeugmaschine-Schnittstelle 13 ist dabei in Form eines Verriegelungselements ausgestaltet. Die elektrischen Anschlüssen 15a der Werkzeugmaschine-Schnittstelle 13 sind wiederum in Form eines ersten und zweiten Pluskontakts 16a, 17a sowie eines ersten und zweiten Minuskontakts 18a, 19a ausgestaltet.

Gemäß eines (nicht gezeigten) alternativen Ausführungsbeispiels kann lediglich ein Pluskontakt und ein Minuskontakt vorgesehen sein. Entsprechend eines weiteren (nicht gezeigten) alternativen Ausführungsbeispiels können drei Pluskontakte und drei Minuskontakte vorgesehen sein.

In Figur 2a ist der Akkumulator 3 dargestellt. Der Akkumulator 3 enthält ein Akkugehäuse 20, eine Anzahl an Energiespeicherzellen 21, eine Akku-Schnittstelle 22 und eine Steuerungseinrichtung 23.

Im Inneren des Akkugehäuses 20 sind die Energiespeicherzellen 21 und die Steuerungseinrichtung 23 positioniert.

Das Akkugehäuse 20 enthält eine Vorderseite 20a, eine Rückseite 20b, eine Oberseite 20c, eine Unterseite 20d, eine linke Seitenwand 20e und eine rechte Seitenwand 20f. An der Oberseite 20c ist die Akku-Schnittstelle 22 positioniert. In den Figuren 2 und 3 ist lediglich die rechte Seitenwand 20f dargestellt. Die nicht gezeigte linke Seitenwand 20e ist jedoch in der Ausgestaltung identisch zu der rechten Seitenwand 20f.

Die Akku-Schnittstelle 22 ist korrespondierend zu der Werkzeugmaschine-Schnittstelle 13 ausgestaltet, sodass die Akku-Schnittstelle 22 und die Werkzeugmaschine-Schnittstelle 13 wiederlösbar miteinander verbunden werden können. Die Akku-Schnittstelle 22 enthält hierzu ebenfalls eine mechanische Anbindungskomponente 14b sowie elektrische Anschlüsse 15b. Die elektrischen Anschlüssen 15b der Akku-Schnittstelle 13 sind wiederum in Form eines ersten und zweiten Pluskontakts 16b, 17b sowie eines ersten und zweiten Minuskontakts 18b, 19b ausgestaltet.

Ebenso wie bei der Werkzeugmaschine-Schnittstelle 13 ist die mechanische Anbindungskomponente 14b ist in Form eines Verriegelungselements ausgestaltet.

Das Verriegelungselement der Akku-Schnittstelle 22 korrespondiert dabei mit dem Verriegelungselement der Werkzeugmaschine-Schnittstelle 13, sodass die beiden Verriegelungselemente wiederlösbar miteinander formschlüssig verbunden werden können.

Alternativ kann die Verbindung der beiden Verriegelungselemente auch kraftschlüssig ausgestaltet sein.

Gemäß einer alternativen Ausgestaltungsform kann die mechanische Anbindungskomponente an der Werkzeugmaschine-Schnittstelle 13 sowie entsprechend an der Akku-Schnittstelle 22 auch als eine Schienenvorrichtung für eine wiederlösbare formschlüssige Anbindung des Akkumulators 3 mit der Werkzeugmaschine 2 ausgestaltet sein.

Darüber hinaus enthält der Akkumulator 3 einen ersten Transceiver 24 sowie ein erstes Kommunikationselement 25.

Wie in Figur 1 angedeutet, ist der erste Transceiver 24 an der Steuerungseinrichtung 23 des Akkumulators 3 positioniert. Entsprechend einer alternativen Ausführungsform kann der erste Transceiver 24 auch an einer andere Stelle des Akkumulators 3 positioniert sein und durch eine erste Leitung mit der Steuerungseinrichtung 23 zum Austausch von Signalen und Daten verbunden sein.

Wie ebenfalls in Figur 1 gezeigt ist gemäß eines ersten Ausführungsbeispiels der vorliegenden Erfindung das erste Kommunikationselement 25 als Stecker ausgestaltet. Das als Stecker ausgestaltete erste Kommunikationselement 25 ist wiederum über eine erste Kommunikationsleitung 27 mit der Steuerungseinrichtung 23 verbunden ist. Durch die Verbindung des ersten Kommunikationselements 25 mit der Steuerungseinrichtung 23 können Signale, Daten und Informationen ausgetauscht werden.

Das erste Kommunikationselement 25 dient im Wesentlichen zum Aussenden und Empfangen von Kommunikationssignalen von bzw. zum Akkumulator 3. Wie in Figur 2a und 3 dargestellt, ist das als Stecker ausgestaltete erste Kommunikationselement 25 an der Akku-Schnittstelle 22 zwischen den Plus- und Minuskontakten 16b, 17b, 18b, 19b positioniert.

Gemäß eines weiteren Ausführungsbeispiels kann das erste Kommunikationselement 25 auch als Funkelement für eine drahtlose Kommunikation bzw. Funkübertragung ausgestaltet sein. Die drahtlose Kommunikation kann dabei auch als "wireless" Kommunikation bezeichnet werden.

Die Werkzeugmaschine 2 enthält entsprechend einen zweiten Transceiver 28 sowie ein zweites Kommunikationselement 29.

Wie ebenfalls in Figur 1 angedeutet ist der zweite Transceiver 28 an der Steuereinrichtung 10 der Werkzeugmaschine 2 positioniert. Entsprechend einer alternativen Ausführungsform kann der zweite Transceiver 28 auch an einer andere Stelle der Werkzeugmaschine 2 positioniert sein und durch eine zweite Leitung mit der Steuereinrichtung 10 zum Austausch von Signalen und Daten verbunden sein.

Wie ebenfalls in Figur 3 angedeutet ist gemäß des ersten Ausführungsbeispiels der vorliegenden Erfindung das zweite Kommunikationselement 29 als Buchse ausgestaltet. Das als Buchse ausgestaltete zweite Kommunikationselement 29 korrespondiert zu dem als Stecker ausgestalteten ersten Kommunikationselement 25, sodass das als Stecker ausgestaltete erste Kommunikationselement 25 eine Steckverbindung mit dem als Buchse ausgestalteten zweiten Kommunikationselement 29 eingehen kann. Durch eine Verbindung des ersten Kommunikationselements 25 mit dem zweiten Kommunikationselement 29 können Signale, Daten und Informationen zwischen der Steuerungseinrichtung 23 des Akkumulators 3 und der Steuereinrichtung 10 der Werkzeugmaschine 2 ausgetauscht bzw. kommuniziert werden. Bei der Kommunikation zwischen der Werkzeugmaschine 2 und dem Akkumulator 3 kann es sich entweder um eine bidirektionale Kommunikation oder aber auch eine um eine uni-direktionale bzw. mono-direktionale Kommunikation handeln. Im Falle einer uni-direktionalen bzw. monodirektionalen Kommunikation werden lediglich Signale, Daten und Informationen von der Steuerungseinrichtung 23 des Akkumulators 3 zu der Steuereinrichtung 10 der Werkzeugmaschine 2 gesendet.

Wie in Figur 2b, 3 angedeutet, ist das als Buchse ausgestaltete zweite Kommunikationselement 29 an der Werkzeugmaschine-Schnittstelle 13 zwischen den Plus- und Minuskontakten 16a, 17a, 18a, 19a positioniert.

Gemäß eines weiteren Ausführungsbeispiels kann auch das zweite Kommunikationselement 29 als Funkelement für eine drahtlose Kommunikation bzw. Funkübertragung ausgestaltet sein. Die drahtlose Kommunikation kann dabei auch als "wireless" Kommunikation bezeichnet werden.

Für das Ausführungsbeispiel, dass sowohl das erste als auch das zweite Kommunikationselement 25, 29 als Funkelement für eine drahtlose Kommunikation bzw. Funkübertragung ausgestaltet sind, findet der Austausch von Signalen, Daten und Informationen von der Steuerungseinrichtung 23 des Akkumulators 3 zu der Steuereinrichtung 10 der Werkzeugmaschine 2 in Form einer Funkverbindung statt. Bei der Funkverbindung kann es sich um eine Bluetooth, WLAN, ZigBee, NFC (Near Field Communication), Wibree oder WiMAX im Radiofrequenzbereich sowie IrDA (Infrared Data Association), optischer Richtfunk (FSO) und Li-Fi (light fidelity) im infraroten bzw. optischen Frequenzbereich handeln.

Figur 1 zeigt das System 1 mit der Werkzeugmaschine 2 und dem Akkumulator 3 in einem verbundenen Zustand, wobei der Akkumulator 3 als Energieversorgung durch die Werkzeugmaschine-Schnittstelle 13 wiederlösbar mit der Akku-Schnittstelle 22 der Werkzeugmaschine 2 verbunden ist. Wie in Figur 3 zu erkennen ist folgt die Werkzeugmaschine 2 hierzu der gestrichelten Linie S. In diesem Zustand sind sowohl die jeweiligen Plus- und Minuskontakte 16a, 17a, 18a, 19a, 16b, 17b, 18b, 19b als auch das erste und zweite Kommunikationselement 25, 29 miteinander verbunden. Wenn sich sowohl die Werkzeugmaschine 2 als auch der Akkumulator 3 jeweils in einem Aktivierungsmodus (auch Aktivierungs- oder Betriebszustand) befindet, kann beispielsweise als eine Funktion des Akkumulators 3 elektrische Energie von dem Akkumulator 3 zu der Werkzeugmaschine 2 gelangen. Darüber hinaus kann beispielsweise als eine Funktion der Werkzeugmaschine 2 sich der als Elektromotor ausgestaltete Antrieb 7 drehen und dadurch ein Drehmoment erzeugen.

Um sicherzustellen, dass auch während einer Verwendung des Systems 1 der Akkumulator 3 weiterhin fest bzw. ordnungsgemäß mit der Werkzeugmaschine 2 verbunden ist, dient ein Kommunikationsverfahren zwischen der Werkzeugmaschine 2 und dem Akkumulator 3. Mit Hilfe des Kommunikationsverfahrens kann eine mögliche Fehlfunktion des Akkumulators 3 beispielsweise wegen einer defekten oder beschädigten Befestigung des Akkumulators 3 an der Werkzeugmaschine 2 detektiert werden.

Zur Durchführung des Verfahrens befinden sich die Werkzeugmaschine 2 sowie der Akkumulator 3 in einem verbundenen Zustand, sodass die jeweiligen mechanische Anbindungskomponenten 14a, 14b, elektrischen Anschlüsse 15a, 15b sowie die Kommunikationselemente 25, 29 miteinander verbunden sind, vgl. Figur 1 oder 3. Mit Hilfe der Steuerungseinrichtung 23 des Akkumulators 3 wird in regelmäßigen zeitlichen Abständen (d.h. in regelmäßigen Zeitabständen) ein Signal erzeugt und über das erste Kommunikationselement 25 von dem Akkumulator 3 an das zweite Kommunikationselement 29 der Werkzeugmaschine 2 gesendet. Das Signal wird dann von dem zweiten Kommunikationselement 29 an die Steuereinrichtung 10 der Werkzeugmaschine 2 gesendet.

Das Aussenden von Signalen in regelmäßigen zeitlichen Abständen bedeutet in diesem Zusammenhang, dass eine bestimmte Übertragungsrate (oder Frequenz) für das Aussenden der Signale gewählt ist, die initial, d.h. gleich nach dem Verbinden des Akkumulators 3 mit der Werkzeugmaschine 2, der Werkzeugmaschine 3 (bzw. der Steuereinrichtung 10 der Werkzeugmaschine 2) übermittelt wird. Des Weiteren wird die Art des Signals sowie weitere Eigenschaften der Signalkommunikation der Werkzeugmaschine 2 mitgeteilt. Die Art des gesendeten Signals sowie die weiteren Eigenschaften der Signalkommunikation können in einem Speicher 30 der Steuereinrichtung 10 der Werkzeugmaschine 2 gespeichert werden.

Das ausgesendete Signal kann dabei durch die sogenannte "Waveform" gekennzeichnet sein. Die "Waveform" eines Signals oder einer Reihe von Signalen beschreibt die Gestalt und die Form des zeitlichen Verlaufs der Veränderung einer Größe einer Schwingung. Bei der Gestalt bzw. Form kann es sich um Sinus, Rechteck, Dreieck, Sägezahn oder dergleichen handeln.

Darüber hinaus kann das ausgesendete Signal beispielsweise durch einen Spannungspegel (auch als Voltage level bekannt), einen Stromstärkenpegel (auch als Current level bekannt), die Spanungsflanke bzw. Signalflanken (auch als Voltage edge bekannt), einen Spannungsabfall (auch als Voltage drop bekannt), einen Spannungsanstieg (auch als Voltage raise bekannt), eine Anzahl an Bits oder dergleichen gekennzeichnet sein.

In dem Fall, dass das ausgesendet Signal in Form Bits gestaltet ist, wird auch eine bestimmte Übertragungsrate (auch als baud rate bekannt) hierzu bestimmt.

In dem vorliegenden Ausführungsbeispiel ist das ausgesendete Signal durch einen Spannungspegel von 5 mV gekennzeichnet.

In dem Fall, dass die vorbestimmte Art und Frequenz der von dem Akkumulator 3 ausgesendeten sowie von der Werkzeugmaschine 2 empfangenen Signale nahezu unverändert sind, verbleiben sowohl die Werkzeugmaschine 2 als auch der Akkumulator in einem bestehenden Betriebszustand (auch Modus oder Betriebsmodus genannt). So kann beispielsweise die Werkzeugmaschine 2 in einem Aktivierungszustand verbleiben, in dem der als Elektromotor ausgestaltete Antrieb 7 ein Drehmoment erzeugt. Der Akkumulator 3 verbleibt ebenfalls in einem Aktivierungszustand, in dem weiterhin elektrische Energie von dem Akkumulator 3 zu der Werkzeugmaschine 2 gelangt.

Wenn beispielsweise aufgrund eines Stutzes oder einer anderen unsachgemäßen Handhabung des Systems 1 der Akkumulator 3 nicht mehr ordnungsgemäß mit der Werkzeugmaschine 2 verbunden und folglich die Kommunikationsverbindung zwischen dem Akkumulator 3 und der Werkzeugmaschine 2 gestört ist, werden die Signale nicht mehr in der vorbestimmten Art sowie in der vorbestimmten Frequenz (bzw. Übertragungsrate bzw. baud rate) übermittelt. Da die vorbestimmte Art und Übermittlungsrate der Signale vor Beginn der Kommunikation in der Steuervorrichtung 10 der Werkzeugmaschine 2 gespeichert wurden, kann eine Abweichung bzw. Veränderung der Art und Übermittlungsrate der empfangenen Signale durch die Steuervorrichtung 10 erkannt werden. Durch erkannte Abweichung bzw. Veränderung wird mit Hilfe der Steuervorrichtung 10 die Werkzeugmaschine 2 von dem Aktivierungszustand in einen Deaktivierungszustand geändert.

Hierbei ist zu beachten, dass für eine Änderung des Aktivierungszustand in den Deaktivierungszustand eine ausreichend große Abweichung der Art und Übermittlungsrate der empfangenen Signale vorliegen muss. Hierzu sind in der Steuervorrichtung 10 der Werkzeugmaschine 2 entsprechende Schwellwerte für die Abweichung gespeichert. In dem Fall, dass entweder die Art oder die Übertragungsrate der empfangenen Signale einen hinterlegten Schwellwert erreicht, wird eine Änderung des Betriebszustands der Werkzeugmaschine 2 durch die Steuervorrichtung bewirkt.

### Bezugszeichenliste

- 1: System
- 2: Werkzeugmaschine
- 3: Akkumulator
- 4: Gehäuse der Werkzeugmaschine
- 4a: vorderes Ende des Gehäuses der Werkzeugmaschine
- 4b: hinteres Ende des Gehäuses der Werkzeugmaschine
- 4c: Oberseite des Gehäuses der Werkzeugmaschine
- 4d: Unterseite des Gehäuses der Werkzeugmaschine
- 5: Werkzeugaufnahme
- 6: Handgriff
- 6a: erstes Ende des Handgriffs
- 6b: zweites Ende des Handgriffs
- 7: Antrieb
- 8: Getriebevorrichtung
- 9: Abtriebswelle
- 9a: erstes Ende der Abtriebswelle
- 9b: zweites Ende der Abtriebswelle
- 10: Steuereinrichtung
- 11: Werkzeug
- 12: Fussvorrichtung
- 13: Werkzeugmaschine-Schnittstelle
- 14a: mechanische Anbindungskomponente der Werkzeugmaschine-Schnittstelle
- 14b: mechanische Anbindungskomponente der Akku-Schnittstelle
- 15a: elektrischen Anschlüssen der Werkzeugmaschine-Schnittstelle
- 15b: elektrischen Anschlüssen der Akku-Schnittstelle
- 16a: erster Pluskontakt der elektrischen Anschlüssen der Werkzeugmaschine-Schnittstelle
- 16b: erster Pluskontakt der elektrischen Anschlüssen der Akku-Schnittstelle
- 17a: zweiter Pluskontakt der elektrischen Anschlüssen der Werkzeugmaschine-Schnittstelle
- 17b: zweiter Pluskontakt der elektrischen Anschlüssen der Akku-Schnittstelle
- 18a: erster Minuskontakt der elektrischen Anschlüssen der Werkzeugmaschine-Schnittstelle
- 18b: erster Minuskontakt der elektrischen Anschlüssen der Akku-Schnittstelle
- 19a: zweiter Minuskontakt der elektrischen Anschlüssen der Werkzeugmaschine-Schnittstelle
- 19b: zweiter Minuskontakt der elektrischen Anschlüssen der Akku-Schnittstelle
- 20: Akkugehäuse
- 20a: Vorderseite des Akkugehäuses
- 20b: Rückseite des Akkugehäuses
- 20c: Oberseite des Akkugehäuses
- 20d: Unterseite des Akkugehäuses
- 20e: linke Seitenwand des Akkugehäuses
- 20f: rechte Seitenwand des Akkugehäuses
- 21: Energiespeicherzellen
- 22: Akku-Schnittstelle
- 23: Steuerungseinrichtung
- 24: erste Transceiver
- 25: erste Kommunikationselement
- 26: Schalter
- 27: erste Kommunikationsleitung
- 28: zweiter Transceiver
- 29: zweites Kommunikationselement
- 30: Speicher
- S: Linie zum Verbinden der Werkzeugmaschine mit dem Akkumulator

## Patentansprüche

1. Verfahren für eine Kommunikation zwischen einer Werkzeugmaschine (2) sowie einem Akkumulator (3) zur Versorgung der Werkzeugmaschine (2) mit elektrischer Energie, wobei der Akkumulator (3) eine Steuerungseinrichtung (23) mit wenigstens einem ersten Transceiver (24) und die Werkzeugmaschine (2) eine Steuereinrichtung (10) mit wenigstens einem zweiten Transceiver (28) enthält, aufweisend die Verfahrensschritte
- Aussenden wenigstens eines ersten Signals von dem ersten Transceiver (24) an den zweiten Transceiver (28),
- Aussenden wenigstens eines zweiten Signals von dem ersten Transceiver (24) an den zweiten Transceiver (28) nach Ablauf einer vorbestimmten Zeitdauer,
- Einstellen der Werkzeugmaschine (2) von einem ersten Betriebszustand in einen zweiten Betriebszustand, wenn die Anzahl der von dem zweiten Transceiver (28) empfangenen Signale in einer vorbestimmten Zeitdauer einen vorbestimmten Schwellwert erreicht und/oder die Art des von dem zweiten Transceiver (28) empfangenen Signals von einer vorbestimmten Art gemäß eines vorbestimmten Schwellwertes abweicht,
- Aussenden wenigstens eines Signals von dem zweiten Transceiver (28) an den ersten Transceiver (24) zum Einstellen des Akkumulators (3) von einem ersten Betriebszustand in einen zweiten Betriebszustand, wenn die Anzahl der von dem zweiten Transceiver (28) empfangenen Signale in einer vorbestimmten Zeitdauer einen vorbestimmten Schwellwert erreicht und/oder die Art des von dem zweiten Transceiver (28) empfangenen Signals von einer vorbestimmten Art gemäß eines vorbestimmten Schwellwertes abweicht, **gekennzeichnet durch** den Verfahrensschritt
- Aussenden eines Signals mit einem Synchronisationsmuster von dem ersten Transceiver (24) an den zweiten Transceiver (28) zum Anpassen der Übertragungsrate für die Kommunikation zwischen dem wenigstens ersten Transceiver (24) und zweiten Transceiver (28).

2. System (1) zur Durchführung des Verfahrens für eine Kommunikation nach Anspruch 1 enthaltend eine Werkzeugmaschine (2) sowie einen Akkumulator (3) zur Versorgung der Werkzeugmaschine (2) mit elektrischer Energie, wobei der Akkumulator (3) eine Steuerungseinrichtung (23) mit wenigstens einem ersten Transceiver (24) und die Werkzeugmaschine (2) eine Steuereinrichtung (10) mit wenigstens einem zweiten Transceiver (28) enthält, und wobei der Akkumulator (3) ein erstes Kommunikationselement (25) und die Werkzeugmaschine (2) ein zweites mit dem ersten Kommunikationselement (25) verbindbares Kommunikationselement (29) enthält, wobei in einem verbundenen Zustand Signale zwischen dem ersten und zweiten Kommunikationselement (25, 29) übermittelbar sind.

3. Akkumulator (3) zur Durchführung der den Akkumulator betreffenden Verfahrensschritte des Verfahrens für eine Kommunikation nach Anspruch 1, enthaltend eine Steuerungseinrichtung (23) mit wenigstens einem ersten Transceiver (24).

4. Werkzeugmaschine (2) zur Durchführung der die Werkzeugmaschine betreffenden Verfahrensschritte des Verfahrens für eine Kommunikation nach Anspruch 1, enthaltend eine Steuereinrichtung (10) mit wenigstens einem zweiten Transceiver (28).

## Claims

1. Method for communication between a power tool (2) and a rechargeable battery (3) for supplying the power tool (2) with electrical energy, wherein the rechargeable battery (3) comprises a controller unit (23) having at least one first transceiver (24), and the power tool (2) comprises a control unit (10) having at least one second transceiver (28), comprising the method steps of
- emitting at least one first signal from the first transceiver (24) to the second transceiver(28);
- emitting at least one second signal from the first transceiver (24) to the second transceiver (28) after a predetermined period of time has elapsed;
- shifting the power tool (2) from a first operating state into a second operating state if the number of signals received by the second transceiver (28) in a predetermined period of time reaches a predetermined threshold value and/or the form of the signal received by the second transceiver (28) deviates from a predetermined form according to a predetermined threshold value;
- emitting at least one signal from the second transceiver (28) to the first transceiver (24) in order to shift the rechargeable battery (3) from a first operating state into a second operating state if the number of signals received by the second transceiver (28) in a predetermined period of time reaches a predetermined threshold value and/or the form of the signal received by the second transceiver (28) deviates from a predetermined form according to a predetermined threshold value, **characterized by** the method step of
- emitting a signal containing a synchronization pattern from the first transceiver (24) to the second transceiver (28) in order to adjust the transmission rate for the communication between the at least first transceiver (24) and second transceiver (28).

2. System (1) for performing the method for communication according to Claim 1, comprising a power tool (2) and a rechargeable battery (3) for supplying the power tool (2) with electrical energy, wherein the rechargeable battery (3) comprises a controller unit (23) having at least one first transceiver (24), and the power tool (2) comprises a control unit (10) having at least one second transceiver (28), and wherein the rechargeable battery (3) comprises a first communication element (25), and the power tool (2) comprises a second communication element (29), which can be connected to the first communication element (25), wherein, in a connected state, signals can be transferred between the first and second communication elements (25, 29).

3. Rechargeable battery (3) for performing those method steps of the method for communication according to Claim 1 which relate to the rechargeable battery, comprising a controller unit (23) having at least one first transceiver (24).

4. Power tool (2) for performing those method steps of the method for communication according to Claim 1 which relate to the power tool, comprising a control unit (10) having at least one second transceiver (28).

## Revendications

1. Procédé de communication entre une machine-outil (2) et un accumulateur (3) destiné à alimenter la machine-outil (2) en énergie électrique, l'accumulateur (3) contenant un dispositif de commande (23) doté d'au moins un premier émetteur/récepteur (24) et la machine-outil (2) un dispositif de commande (10) doté d'au moins un deuxième émetteur/récepteur (28),
comprenant les étapes suivantes
- émission d'au moins un premier signal du premier émetteur-récepteur (24) vers le deuxième émetteur-récepteur (28),
- émission d'au moins un deuxième signal du premier émetteur-récepteur (24) vers le deuxième émetteur-récepteur (28) après écoulement d'une durée prédéterminée,
- réglage de la machine-outil (2) d'un premier état de fonctionnement à un deuxième état de fonctionnement, lorsque le nombre de signaux reçus par le deuxième émetteur-récepteur (28) dans une durée prédéterminée atteint une valeur de seuil prédéterminée et/ou le type du signal reçu par le deuxième émetteur-récepteur (28) s'écarte d'un type prédéterminé selon une valeur de seuil prédéterminée,
- émission d'au moins un signal du deuxième émetteur-récepteur (28) au premier émetteur-récepteur (24) en vue de régler l'accumulateur (3) d'un premier état de fonctionnement à un deuxième état de fonctionnement, lorsque le nombre de signaux reçus par le deuxième émetteur-récepteur (28) dans une durée prédéterminée atteint une valeur de seuil prédéterminée et/ou le type du signal reçu par le deuxième émetteur-récepteur (28) s'écarte d'un type prédéterminé selon une valeur de seuil prédéterminée, **caractérisé par** l'étape
- émission d'un signal avec un motif de synchronisation du premier émetteur-récepteur (24) au deuxième émetteur-récepteur (28) afin d'adapter le débit de transmission pour la communication entre l'au moins un premier émetteur-récepteur (24) et le deuxième émetteur-récepteur (28).

2. Système (1) pour la mise en œuvre du procédé de communication selon la revendication 1, comprenant une machine-outil (2) ainsi qu'un accumulateur (3) destiné à alimenter la machine-outil (2) en énergie électrique, l'accumulateur (3) contenant un dispositif de commande (23) doté d'au moins un premier émetteur/récepteur (24) et la machine-outil (2) un dispositif de commande (10) doté d'au moins un deuxième émetteur/récepteur (28), et l'accumulateur (3) contenant un premier élément de communication (25) et la machine-outil (2) un deuxième élément de communication (29) qui peut être connecté au premier élément de communication (25), des signaux pouvant, dans un état connecté, être communiqués entre le premier et le deuxième élément de communication (25, 29).

3. Accumulateur (3) destiné à exécuter les étapes de procédé concernant l'accumulateur du procédé de communication selon la revendication 1, comprenant un dispositif de commande (23) doté d'au moins un premier émetteur-récepteur (24).

4. Machine-outil (2) destinée à exécuter les étapes de procédé concernant la machine-outil du procédé de communication selon la revendication 1, comprenant un dispositif de commande (10) doté d'au moins un deuxième émetteur-récepteur (28).
